# EUROPÄISCHE PATENTANMELDUNG

(11) **EP 2 003 764 A2**
(43) Veröffentlichungstag der Anmeldung: **17.12.2008**
(21) Anmeldenummer: 08104274.9
(22) Anmeldetag: 05.06.2008
(51) Int. Cl.: H02K 1/20, H02K 7/14, B60K 7/00, B61C 3/00

(54) **Schienenfahrzeug-Direktantrieb mit Statorkühlung sowie dessen Herstellungsverfahren**

(30) Priorität: 15.06.2007 AT 9312007
(71) Anmelder: Traktionssysteme Austria GmbH, 2351 Wiener Neudorf (AT)
(72) Erfinder: Neudorfer, Harald, 2514 Traiskirchen (AT); Heschl, Karl, 2393 Sittendorf (AT)
(74) Vertreter: Müllner, Martin

(57) **Zusammenfassung**

Schienenfahrzeug-Direktantrieb für ein Fahrzeugrad, bei dem der Rotor eines Außenläufer-Motors in lediglich einem Radreifen (17) sitzend mit diesem einen Radreifen (17) antriebsweise verbunden ist, bei dem der Stator eine vom Fahrwerksrahmen, Drehgestellrahmen od. dgl. getragene Achse (2) aufweist, auf der ein Blechpaket (1) mit Nuten zur Aufnahme der Wicklungen sitzt und wobei im Stator eine Flüssigkeitskühlung vorgesehen ist. Der Rotor besteht aus einem lamellierten Blechpaket (11) und einem außen an das Blechpaket (11) anschließenden massiven Gehäuse (10), das vorzugsweise auf das Blechpaket (11) aufgeschrumpft ist. Um Platz in Axialrichtung zu gewinnen, können die Lager (14,15) für den Rotor eine integrierte Abdichtung aufweisen. Um die Leistung des Elektromotors zu steigern, ist vorgesehen, dass zur Kühlung des Stators Öffnungen im Blechpaket (1) des Stators vorgesehen sind, in denen sich Kühlrohre (6) aus antimagnetischem Stahl befinden, die an ihren Enden mit Kühlmittelverteilringen (4,5) aus antimagnetischem Stahl verschweißt sind.

## Beschreibung

### Technisches Gebiet

Die vorliegende Erfindung betrifft einen Schienenfahrzeug-Direktantrieb für ein Fahrzeugrad in Form eines Außenläufer-Motors mit einem Rotor und mit einem Stator, wobei der Rotor, der aus einem lamellierten Blechpaket und einem außen an das Blechpaket anschließenden massiven Gehäuse besteht, in lediglich einem Radreifen sitzend mit diesem einen Radreifen antriebsweise verbunden ist, wobei der Stator eine vom Fahrwerksrahmen, Drehgestellrahmen od. dgl. getragene Achse aufweist, auf der ein Blechpaket mit Nuten zur Aufnahme der Wicklungen sitzt und wobei im Stator eine Flüssigkeitskühlung vorgesehen ist.

### Stand der Technik

Ein Schienenfahrzeug-Direktantrieb ähnlich der eingangs genannten Art ist aus der DE 2535418 Abekannt. Gemäß dieser Schrift ist allerdings ein gemeinsamer Motor für ein Radpaar vorgesehen, und es gibt keine Flüssigkeitskühlung.

Ein ähnlicher Schienenfahrzeug-Direktantrieb ist aus der EP 582563 B bekannt. Dort ist eine Flüssigkeitskühlung beschrieben, allerdings ist dort nicht ausdrücklich erwähnt, dass der Rotor aus einem lamellierten Blechpaket und einem außen an das Blechpaket anschließenden massiven Gehäuse besteht.

Problematisch ist bei derartigen Schienenfahrzeug-Direktantrieben, dass der Innendurchmesser des Radreifens und damit der Außendurchmesser des Rotors vorgegeben ist. Die zu lösende Aufgabe besteht daher darin, bei einem Außenläufer-Motor mit vorgegebenem Außendurchmesser eine möglichst große Leistung bzw. einen möglichst großen Wirkungsgrad zu erzielen. Da die Leistung mit zunehmendem Durchmesser des Stators steigt, wurde in der EP 582563 Bversucht, den Rotor möglichst dünn auszuführen: Er besteht nur aus dem Gehäuse, welches Nuten aufweist, in welche die Kurzschlusswicklungen eingelegt sind. Als Alternative ist erwähnt, dass das Gehäuse selbst geblecht ist, was allerdings im Hinblick auf die mechanische Stabilität bedenklich ist.

Im Rahmen der vorliegenden Erfindung wurde gefunden, dass die durch das Blechpaket bewirkten besseren magnetischen Eigenschaften (geringere Eisenverluste) des Rotors die Reduktion der Leistung infolge des geringeren Durchmessers mehr als ausgleichen, sodass durch das Blechpaket infolge des höheren Wirkungsgrades insgesamt ein Leistungsgewinn entsteht. Insofern war die Lösung gemäß der DE 2535418 Amit Gehäuse und Blechpaket günstiger.

Gemäß der EP 582563 Bwurde weiters versucht, den Stator dadurch zu kühlen, dass man die Achse, auf der der Stator befestigt ist, kühlt. Auf diese Weise ist es nicht notwendig, im Blechpaket Löcher für die Kühlleitungen vorzusehen, sodass der magnetische Kreis keine unnötigen Störungen aufweist.

Ein Schienenfahrzeug-Direktantrieb der eingangs genannten Art ist aus der gattungsbildenden EP 623988 Abekannt. Auch hier erfolgt die Flüssigkeitskühlung durch die Achse. Zusätzlich ist eine Luftkühlung vorgesehen.

### Darstellung der Erfindung

Es ist Aufgabe der vorliegenden Erfindung, einen Schienenfahrzeug-Direktantrieb der eingangs genannten Art dahingehend zu verbessern, dass er eine größere Leistung erbringt bzw. einen größeren Wirkungsgrad hat.

Diese Aufgabe wird erfindungsgemäß dadurch gelöst, dass bei einem Schienenfahrzeug-Direktantrieb der eingangs genannten Art zur Kühlung des Stators Öffnungen im Blechpaket des Stators vorgesehen sind, in denen sich Kühlrohre aus antimagnetischem Material, vorzugsweise aus antimagnetischem Stahl, befinden, die an ihren Enden mit Kühlmittelverteilringen aus antimagnetischem Material, vorzugsweise aus antimagnetischem Stahl, dicht verbunden, vorzugsweise verschweißt, sind.

Wie oben ausgeführt, bewirken diese Öffnungen im Blechpaket zwar eine Verschlechterung der magnetischen Eigenschaften des Stators; da aber die Kühlung im Blechpaket des Stators wesentlich effizienter ist als die Kühlung über die Achse, kann man an den Stator - ohne die zulässigen Temperaturen zu überschreiten - mit höherem Strom betreiben, sodass sich durch diese Maßnahme insgesamt eine Leistungssteigerung ergibt.

Dass die Kühlung im Stator-Blechpaket effizienter ist als eine Kühlung über die Achse, ist leicht ersichtlich. Einerseits fällt die Verlustwärme in den Wicklungen des Stators bzw. im Blechpaket selbst an, das heißt also relativ weit von der Achse entfernt. Daher ist die Temperaturdifferenz zwischen der Wicklung und der Kühlflüssigkeit im Falle der gekühlten Achse höher, die Kühlung also weniger wirksam. Andererseits ist auch die Oberfläche der Kühlrohre insgesamt höher als die Oberfläche der Achse, sodass auch deswegen der Wärmewiderstand zwischen den Wicklungen und der Kühlflüssigkeit bei der erfindungsgemäßen Ausführung geringer ist.

Die Verbindung zwischen dem Gehäuse und dem Blechpaket kann dadurch hergestellt werden, dass man das Gehäuse auf das Blechpaket aufschrumpft: Das heißt man führt den Innendurchmesser des Gehäuses etwas kleiner aus als den Außendurchmesser des Blechpakets, erhitzt dann das Gehäuse so stark, dass dessen Innendurchmesser infolge der Wärmedehnung größer wird als der Außendurchmesser des Blechpakets, und schiebt dann das Blechpaket in das Gehäuse ein. Nach Abkühlung des Gehäuses ist dieses mit dem Blechpaket fest verbunden.

Vorzugsweise sind im Blechpaket halbgeschlossene Nuten für die Kurzschlusswicklung vorgesehen. Halbgeschlossene Nuten sind bekanntlich bezüglich der magnetischen Eigenschaften besser als offene Nuten: Die Nuten vergrößern den durchschnittlichen Abstand (also den Luftspalt) zwischen Rotor und Stator. Diese Vergrößerung des Luftspalts wird durch den Carter-Faktor beschrieben. Je schmäler nun die Nuten an der Oberfläche sind, desto mehr nähert sich der Carter-Faktor dem Wert 1.

Da man die einzelnen Bleche durch Stanzen herstellen kann, ist es bei dem erfindungsgemäßen Rotor kein Problem, die Nuten halbgeschlossen auszubilden. Bei dem massiven Rotor gemäß der EP 582563 Bwäre es aber nur mit einem wirtschaftlich nicht vertretbaren Herstellungsaufwand möglich, halbgeschlossene Nuten auszubilden.

Weiters ist es günstig, wenn die Lager für den Rotor eine integrierte Abdichtung aufweisen. Solche Lager sind im Handel erhältlich und benötigen weniger Platz als normale Lager, die im Motor mit einer zusätzlichen Abdichtung versehen werden müssen. Auf diese Weise kann die Eisenlänge des Motors erhöht werden, was wiederum zu einer Steigerung der Leistung und zu einem höheren Wirkungsgrad führt.

Es ist zweckmäßig, wenn die Kühlmittelverteilringe auf der den Kühlrohren abgewandten Seite nierenförmige Vertiefungen aufweisen, die mindestens zwei, vorzugsweise vier, Kühlrohre miteinander verbinden, dass diese Vertiefungen auf den beiden Kühlmittelverteilringen gegeneinander versetzt sind und dass diese Kühlmittelverteilringe mit Verschlussringen dicht verbunden sind, die die nierenförmigen Vertiefungen nach außen abschließen, sodass die Flüssigkeit in den Kühlrohren mäanderförmig fließt. Diese Konstruktion benötigt nur eine sehr geringe axiale Länge, sodass die axiale Länge des Motors entsprechend groß ausgeführt werden kann, was sich auf die Gesamtleistung und den Wirkungsgrad positiv auswirkt.

Wie gesagt, die Kühlrohre und die Kühlmittelverteilringe (und auch die Verschlussringe) bestehen vorzugsweise aus nichtmagnetischem Stahl. Umgekehrt muss die Achse aus hochfestem Stahl bestehen, und hochfester Stahl ist magnetisierbar. Nun lassen sich aber solch unterschiedliche Stähle wegen des unterschiedlichen Kohlenstoffgehalts nur schlecht miteinander verschweißen. Es ist daher günstig, wenn ein Verschlussring mit einem Verbindungsring aus Ni-haltigem Stahl verschweißt ist, der seinerseits mit der Achse verschweißt ist. Der zusätzlich vorgesehene Verbindungsring aus Nickel-legiertem Stahl lässt sich sowohl mit der Achse als auch mit dem Verschlussring gut verschweißen.

Nach einem weiteren Merkmal der vorliegenden Erfindung ist vorgesehen, dass die Kühlrohre aus mehreren, vorzugsweise aus zwei, Teilstücken zusammengesetzt sind, die durch eine elektrisch nichtleitende Muffe miteinander verbunden sind. Auf diese Weise werden die Wirbelstromverluste reduziert.

Weiters ist es zweckmäßig, wenn das Gehäuse des Rotors und ein Lagerschild einstückig ausgeführt sind und nur das zweite Lagerschild ein weiteres Bauteil ist, das mit dem Gehäuse des Rotors z.B. durch Schrauben verbunden ist. Durch die einstückige Ausbildung wird die Steifigkeit des Rotors erhöht. Bei der Herstellung wird der Stator in den Rotor von der offenen Seite eingeschoben, dann wird das zweite Lagerschild auf das Gehäuse des Rotors aufgeschraubt. Durch die konstruktionsbedingt höhere Stabilität des Rotors kann dieser etwas schwächer ausgebildet werden, was wiederum einen Platzgewinn im Inneren und damit eine Leistungssteigerung bzw. einen Wirkungsgradgewinn bewirkt.

Für eine besonders effiziente Kühlung ist ein Verfahren zur Herstellung eines Schienenfahrzeug-Direktantriebs vorgesehen, bei dem man das Kühlsystem unter einen so hohen Druck setzt, dass sich die Kühlrohre aufbeulen und fest gegen die Öffnung im Blechpaket anlegen. Dieses Unter-Druck-Setzen hat somit zweierlei Effekt: Einerseits wird damit die Dichtheit des Kühlsystems überprüft, und andererseits legen sich die Kühlrohre fest an das Blechpaket an, sodass der Wärmeübergang zwischen Blechpaket und Kühlrohren gering ist.

### Kurze Beschreibung der Abbildungen der Zeichnungen

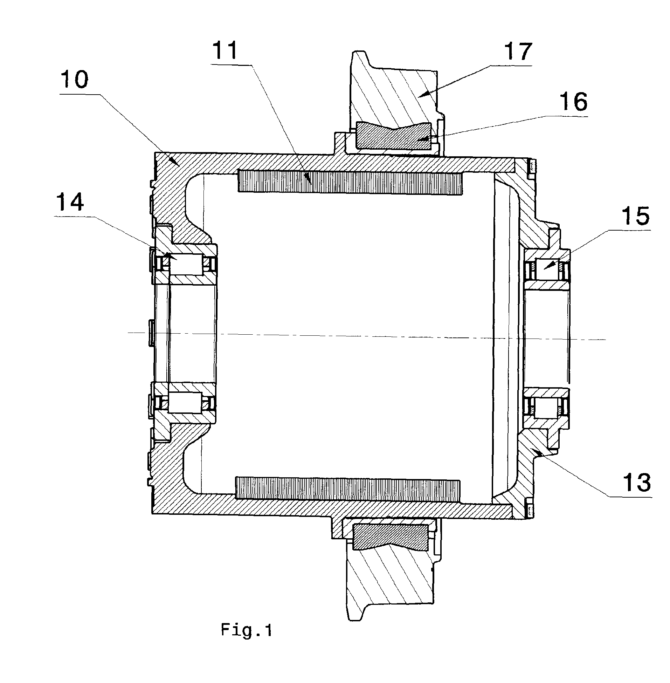

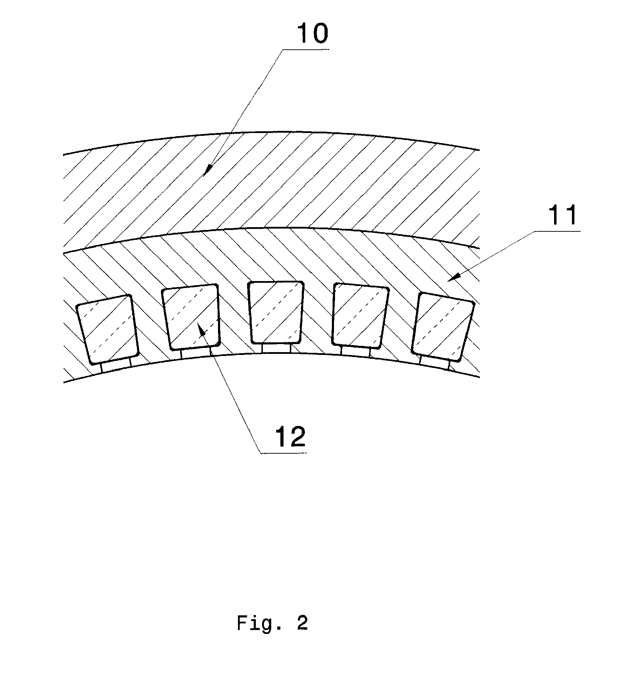

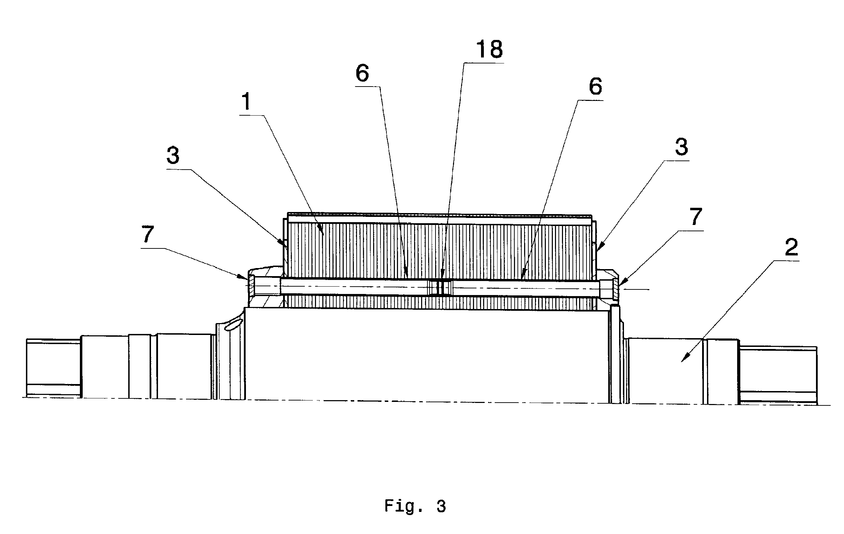

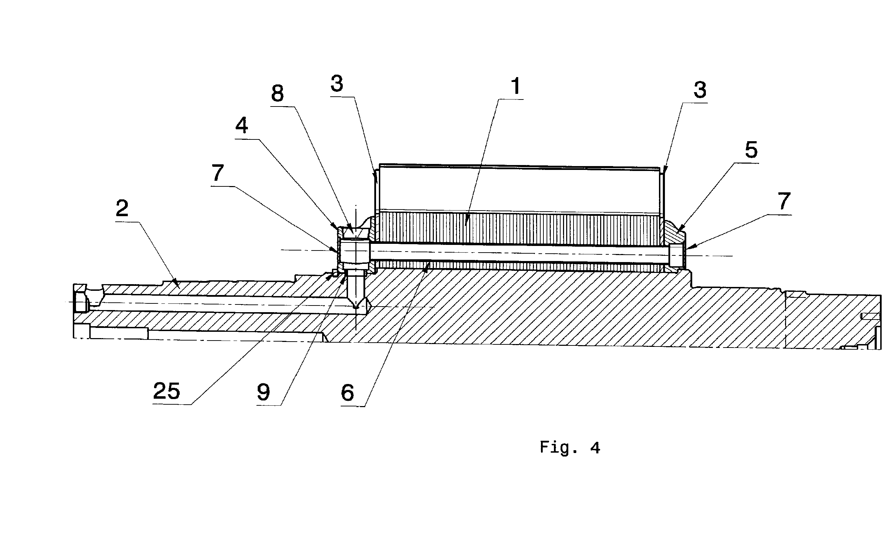

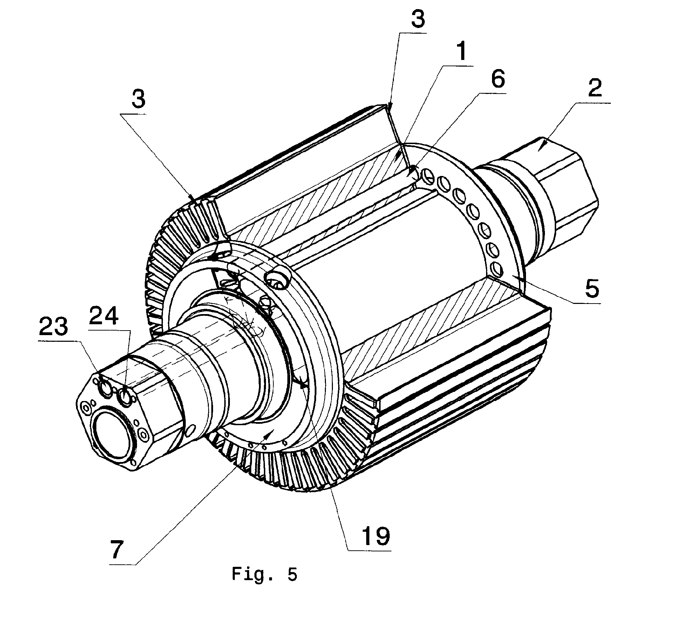

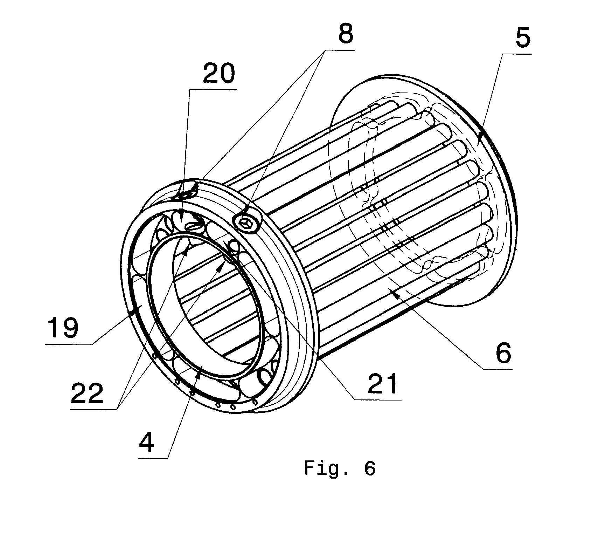

Anhand der beiliegenden Zeichnungen wird die vorliegende Erfindung näher erläutert. Es zeigt: Fig. 1 einen Längsschnitt durch einen Rotor eines erfindungsgemäßen Schienenfahrzeug-Direktantriebs; Fig. 2 einen Ausschnitt eines Querschnitts dieses Rotors; Fig. 3 zeigt einen Stator eines erfindungsgemäßen Schienenfahrzeug-Direktantriebs im Längsschnitt; Fig. 4 zeigt eine ähnliche Ansicht mit geschnittener Achse; Fig. 5 zeigt eine perspektivische Ansicht dieses Stators, mit zum Teil weggebrochenen Elementen; und Fig. 6 zeigt das Kühlsystem ohne Elektroblech und Achse in gleicher Ansicht wie Fig. 5.

### Bester Weg zur Ausführung der Erfindung

In Fig. 1 ist ein Rotor eines erfindungsgemäßen Schienenfahrzeug-Direktantriebs im Längsschnitt zu sehen. Er besteht aus einem Gehäuse 10, an welchem außen ein Radreifen 17 befestigt ist. Zur Dämpfung befindet sich zwischen dem Radreifen 17 und dem Gehäuse 10 ein Gummielement 16. Dieses Gummielement 16 darf im Betrieb nicht zu heiß werden. Dadurch ergibt sich eine Grenze für die maximal zulässige Leistung, deren genauer Wert natürlich von der Konstruktion des Elektromotors, insbesondere von dessen Kühlung, abhängt.

Der Außendurchmesser des Gehäuses 10 ist vorgegeben (440 mm). Innerhalb dieses Durchmessers muss der gesamte Elektromotor untergebracht werden.

Bei dem erfindungsgemäßen Schienenfahrzeug-Direktantrieb kommt es beim Gehäuse 10 nur auf dessen mechanische Eigenschaften an. Für den Magnetfluss dient nämlich ein Blechpaket 11. Die Verbindung des Gehäuses 10 und des Blechpakets 11 erfolgt durch Aufschrumpfen, das heißt der Innendurchmesser des Gehäuses 10 ist etwas geringer als der Außendurchmesser des Blechpakets 11. Damit nun das Blechpaket 11 in das Gehäuse 10 eingesetzt werden kann, wird das Gehäuse 10 erhitzt (z.B. auf 200°C), sodass sein Innendurchmesser infolge der Wärmeausdehnung größer wird als der Außendurchmesser des Blechpakets 11. Nach dem Abkühlen ist dann das Gehäuse 10 mit dem Blechpaket 11 so fest verbunden, dass alle Drehmomente, die der Rotor aufbringen kann, zuverlässig übertragen werden können.

Das Gehäuse 10 bildet gleichzeitig ein Lagerschild (auf der linken Seite, wie in Fig. 1 gesehen). Durch diese einstückige Ausbildung wird die Stabilität im Vergleich zu einer Schraubverbindung erhöht, sodass mit einer geringeren Wandstärke ausgekommen werden kann. In diesem Lagerschild sind Wälzlager 14 vorgesehen, damit der Rotor auf der Achse des Stators gelagert werden kann. Auf der gegenüberliegenden Seite ist das Lagerschild 13 wie üblich mit einer Schraubverbindung am Gehäuse 10 des Rotors befestigt. (Dies ist notwendig, damit der Stator eingesetzt werden kann.) Dieses Lagerschild 13 weist ebenfalls ein Wälzlager 15 auf. Beide Wälzlager 14, 15 weisen eine integrierte Abdichtung auf, sodass keine weiteren Elemente zur Abdichtung der Lager notwendig sind. Auch dies spart Platz in Axialrichtung, sodass der Elektromotor mit einer etwas größeren Eisenlänge gebaut werden kann, was die Leistung und den Wirkungsgrad erhöht.

In konkreten Zahlen: Die Eisenlänge konnte von 240 mm auf 285 mm gesteigert werden.

In Fig. 2 ist ein Ausschnitt des Rotors im Querschnitt gezeigt. Man sieht hier wieder das Gehäuse 10, das auf das Blechpaket 11 aufgeschrumpft ist. Das Blechpaket 11 weist halboffene Nuten 12 auf, in welche die Kurzschlusswicklung des Rotors eingelegt ist.

In der Ansicht von Fig. 2 liegen die einzelnen Bleche des Blechpakets 11 parallel zur Zeichenebene. Die Nuten lassen sich daher in jedem Blech durch einen einfachen Stanzvorgang herstellen.

Da das Gehäuse 10 an dem magnetischen Fluss nicht beteiligt ist, ist der Rotor insgesamt dicker, sodass der Durchmesser des Stators verringert werden muss. Durch das Blechpaket 11 werden aber die Wirbelstromverluste stark verringert, sodass sich dennoch insgesamt eine Leistungssteigerung ergibt. Es ergeben sich insbesondere ein geringerer Leerlaufstrom, ein geringerer Schlupf und somit eine geringere Rotortemperatur und ein höherer Wirkungsgrad.

Anhand der Fig. 3 bis 6 wird nun der Stator beschrieben, der in den Rotor gemäß den Fig. 1 und 2 eingesetzt werden soll.

Auf der Achse 2 (siehe Fig. 3) ist ein Blechpaket 1 zwischen zwei Endblechen 3 angeordnet. Dieses Blechpaket 1 weist (siehe Fig. 5) Nuten auf, in die die Statorwicklung eingelegt wird. Damit das Blechpaket 1 sicher zusammengehalten wird, ist ein Sicherungsring 25 (siehe Fig. 4) vorgesehen.

Durch dieses Blechpaket 1 verlaufen Kühlrohre 6 (siehe Fig. 3), durch die Kühlflüssigkeit geleitet werden kann. Da die Wärme hauptsächlich im Blechpaket 1 (wegen der Eisenverluste) und in den Wicklungen entsteht, befinden sich diese Kühlrohre 6 in unmittelbarer Nähe der Wärmequelle. Auch wenn diese Kühlrohre 6 den magnetischen Fluss stören, so überwiegt die höhere Wärmeabfuhr doch die Nachteile des gestörten Magnetflusses, verglichen mit der bekannten Kühlung der Achse.

Um dennoch einen ausreichend starken Magnetfluss sicherzustellen, ist es günstig, den Durchmesser der Achse 2 zu verringern und dafür die Dicke des Blechpakets 1 zu erhöhen.

Von der Wärmeleitfähigkeit her würde sich als Material für die Kühlrohre 6 natürlich Kupfer anbieten, aber wegen der hohen elektrischen Leitfähigkeit von Kupfer würden sich dann in den Kühlrohren 6 sehr hohe Wirbelströme ausbilden, die nicht akzeptabel wären. Als Material für die Kühlrohre 6 wird derzeit nichtmagnetischer Stahl bevorzugt. Dieses Material hat doch einen deutlich höheren elektrischen Widerstand, sodass sich die Wirbelstromverluste in Grenzen halten. Wenn man sie noch weiter verringern möchte, kann man die Kühlrohre 6 aus zwei Teilstücken zusammensetzen, die in der Mitte mit einer Muffe 18 aus elektrisch nichtleitendem Material miteinander verbunden sind.

Anhand der Fig. 4 bis 6 wird nun die Kühlung des Motors genauer erklärt. Die Kühlrohre 6 sind an beiden Enden jeweils mit einem Kühlmittelverteilring 4 bzw. 5 verschweißt. Da hier nur wenig Platz ist, kommt Laserschweißen oder Elektronenstrahlschweißen in Frage.

Die Kühlmittelverteilringe 4 und 5 weisen an ihren den Kühlrohren 6 abgewandten Seiten nierenförmige Vertiefungen 19 auf. Diese Vertiefungen 19 sind in den beiden Kühlmittelverteilringen 4 bzw. 5 gegeneinander versetzt angeordnet. Zwei Vertiefungen 20, 21 im Kühlmittelverteilring 4 stehen über Öffnungen 22 mit Kanälen 23, 24 der Achse 2 in Verbindung. Herstellungstechnisch notwendige Bohrungen sind mit Verschlussstopfen 8 verschlossen.

Auf diese Weise fließt das Kühlmittel über den Kanal 23 und die Öffnung 22 in die Vertiefung 20. Von dort fließt es über zwei Kühlrohre 6 (die also parallel geschaltet sind) zum gegenüberliegenden Kühlmittelverteilring 5. Über die entsprechende nierenförmige Vertiefung 19 gelangt das Kühlmittel zu den zwei benachbarten Kühlrohren 6 und fließt durch diese wieder zurück zum Kühlmittelverteilring 4. Das Kühlmittel fließt auf diese Weise mäanderförmig hin und her, bis es zur Vertiefung 21 und von dieser über die Öffnung 22 zum Kanal 24 in der Achse 2 gelangt.

Es ist natürlich nicht notwendig, dass jeweils genau zwei Kühlrohre 6 parallel geschaltet sind. Es können ebenso gut alle Kühlrohre 6 in Serie durchströmt werden oder mehr als zwei Kühlrohre 6 parallel geschaltet werden. Dies hängt lediglich vom gewünschten Strömungswiderstand ab.

Die Kühlmittelverteilringe 4 und 5 sind mit Verschlussringen 7 zugeschweißt, damit die Vertiefungen 19, 20 und 21 dicht abgeschlossen sind.

Der Verschlussring 7 auf der Seite, wo die Kanäle 23, 24 münden, muss mit der Achse 2 verschweißt werden (siehe Fig. 4). Da diese beiden Materialien aber stark unterschiedlichen Kohlenstoffgehalt haben und sich somit nur schlecht direkt verschweißen lassen, ist ein Verbindungsring 9 vorgesehen, der aus nickelhaltigem Stahl besteht. Dieser Verbindungsring 9 wird daher mit der Achse 2 verschweißt und andererseits auch mit dem Verschlussring 7.

Wenn der Motor fertig zusammengebaut ist, wird das Kühlsystem unter hohen Druck gesetzt (200 bis 300 bar). Dadurch dehnen sich die Kühlrohre 6 auf und pressen sich gegen die Löcher im Blechpaket 1. Auf diese Weise wird der thermische Widerstand zwischen Blechpaket 1 und Kühlflüssigkeit stark herabgesetzt. Außerdem ist dies natürlich eine sehr gute Dichtigkeitsprobe.

Insgesamt konnte durch diese Maßnahmen (höherer Wirkungsgrad wegen des Rotor-Blechpakets, bessere Wärmeabfuhr und größere Eisenlänge) die Leistung des Elektromotors deutlich gesteigert werden, und zwar die Spitzenleistung von 40 kW auf 45 kW und die Dauerleistung von 30 kW auf 35 kW.

## Patentansprüche

1. Schienenfahrzeug-Direktantrieb für ein Fahrzeugrad in Form eines Außenläufer-Motors mit einem Rotor und mit einem Stator, wobei der Rotor, der aus einem lamellierten Blechpaket (11) und einem außen an das Blechpaket (11) anschließenden massiven Gehäuse (10) besteht, in lediglich einem Radreifen (17) sitzend mit diesem einen Radreifen (17) antriebsweise verbunden ist, wobei der Stator eine vom Fahrwerksrahmen, Drehgestellrahmen od. dgl. getragene Achse (2) aufweist, auf der ein Blechpaket (1) mit Nuten zur Aufnahme der Wicklungen sitzt und wobei im Stator eine Flüssigkeitskühlung vorgesehen ist, **dadurch gekennzeichnet, dass** zur Kühlung des Stators Öffnungen im Blechpaket (1) des Stators vorgesehen sind, in denen sich Kühlrohre (6) aus antimagnetischem Material, vorzugsweise aus antimagnetischem Stahl, befinden, die an ihren Enden mit Kühlmittelverteilringen (4, 5) aus antimagnetischem Material, vorzugsweise aus antimagnetischem Stahl, dicht verbunden, vorzugsweise verschweißt, sind.

2. Schienenfahrzeug-Direktantrieb nach Anspruch 1, **dadurch gekennzeichnet, dass** das massive Gehäuse (10) auf das Blechpaket (11) aufgeschrumpft ist.

3. Schienenfahrzeug-Direktantrieb nach Anspruch 1 oder 2, **dadurch gekennzeichnet, dass** im Blechpaket (11) des Rotors halbgeschlossene Nuten (12) für die Kurzschlusswicklung vorgesehen sind.

4. Schienenfahrzeug-Direktantrieb nach einem der Ansprüche 1 bis 3, **dadurch gekennzeichnet, dass** die Lager (14, 15) für den Rotor eine integrierte Abdichtung aufweisen.

5. Schienenfahrzeug-Direktantrieb nach einem der Ansprüche 1 bis 4, **dadurch gekennzeichnet, dass** die Kühlmittelverteilringe (4, 5) auf der den Kühlrohren (6) abgewandten Seite nierenförmige Vertiefungen (19) aufweisen, die mindestens zwei, vorzugsweise vier, Kühlrohre (6) miteinander verbinden, dass diese Vertiefungen (19) auf den beiden Kühlmittelverteilringen (4, 5) gegeneinander versetzt sind und dass diese Kühlmittelverteilringe (4, 5) mit Verschlussringen (7) dicht verbunden sind, die die nierenförmigen Vertiefungen (19) nach außen abschließen, sodass die Flüssigkeit in den Kühlrohren (6) mäanderförmig fließt.

6. Schienenfahrzeug-Direktantrieb nach Anspruch 5, **dadurch gekennzeichnet, dass** ein Verschlussring (7) mit einem Verbindungsring (9) aus Ni-haltigem Stahl verschweißt ist, der seinerseits mit der Achse (2) verschweißt ist.

7. Schienenfahrzeug-Direktantrieb nach einem der Ansprüche 1 bis 6, **dadurch gekennzeichnet, dass** die Kühlrohre (6) aus mehreren, vorzugsweise aus zwei, Teilstücken zusammengesetzt sind, die durch eine elektrisch nichtleitende Muffe (18) miteinander verbunden sind.

8. Schienenfahrzeug-Direktantrieb nach einem der Ansprüche 1 bis 7, **dadurch gekennzeichnet, dass** das Gehäuse (10) des Rotors und ein Lagerschild einstückig ausgeführt sind und nur das zweite Lagerschild (13) ein weiteres Bauteil ist, das mit dem Gehäuse (10) des Rotors z.B. durch Schrauben verbunden ist.

9. Verfahren zur Herstellung eines Schienenfahrzeug-Direktantriebs nach einem der Ansprüche 1 bis 8, **dadurch gekennzeichnet, dass** man das Kühlsystem unter einen so hohen Druck setzt, dass sich die Kühlrohre (6) aufbeulen und fest gegen die Öffnung im Blechpaket (11) anlegen.
